# EUROPÄISCHE PATENTSCHRIFT

(11) **EP 0 689 931 B1**
(45) Veröffentlichungstag und Bekanntmachung des Hinweises auf die Patenterteilung: **26.09.2001**
(21) Anmeldenummer: 95109322.8
(22) Anmeldetag: 16.06.1995
(51) Int. Cl.: B29C 65/34, F16L 27/02

(54) **Verfahren zum Schweissen von Kunststoffrohren und Muffe zur Durchführung des Verfahrens**
Process for welding plastic tubes and socket for its realisation
Procédé pour le soudage de tuyau en matière plastique et raccord pour sa réalisation

(30) Priorität: 27.06.1994 DE 4422372
(43) Veröffentlichungstag der Anmeldung: 03.01.1996
(73) Patentinhaber: agru Alois Gruber G.m.b.H., 4540 Bad Hall (AT)
(72) Erfinder: Lueghamer, Albert, A-4540 Bad Hall (AT)
(74) Vertreter: Rupprecht, Klaus, Dipl.-Ing.

(56) Entgegenhaltungen:
- EP-A- 0 155 548
- EP-A- 0 159 733
- EP-A- 0 262 735
- EP-A- 0 284 834
- EP-A- 0 525 339
- DE-A- 3 808 228
- DE-A- 4 332 196
- DE-C- 3 226 575
- FR-A- 1 416 207
- US-A- 3 022 209
- US-A- 3 061 503
- PATENT ABSTRACTS OF JAPAN vol. 017, no. 558 (M-1493), 7.Oktober 1993 & JP 05 157190 A (SEKISUI CHEM CO LTD), 22.Juni 1993,
- PATENT ABSTRACTS OF JAPAN vol. 018, no. 325 (M-1625), 21.Juni 1994 & JP 06 074386 A (ISAMU HANADA), 15.März 1994,
- PATENT ABSTRACTS OF JAPAN vol. 016, no. 181 (M-1242), 30.April 1992 & JP 04 019494 A (KUBOTA CORP), 23.Januar 1992,

## Beschreibung

Die Erfindung bezieht sich auf ein Verfahren und eine Muffe zum Schweißen von Rohrteilen vergleichsweise geringen Durchmessers, insbesondere aus Polyvinylidendifluorid (PVDF). Auch Rohre aus anderen Kunststoffen wie Polyvinylchlorid (PVC), Clean-Polyvinylchlorid (CPVC), Polyethylen (PE), Polypropylen (PP), Ethylenchlortrifluorethylen (ECTFE), Perfluoralkoxyalkan (PFA), Polyetheresterketon (PEEK), Polyphenylensulfid (PPS) od.dgl. können gemäß der Erfindung miteinander verbunden werden.

Der Einsatz von sogenannten Elektromuffen beim Verschweißen von Rohren aus Polyethylen hoher Dichte (PEHD) ist bekannt. Hierbei werden die axial ausgerichteten, zu verschweißenden Rohrteile fluchtend, jedoch unter Einhaltung eines gewissen Spaltes, in den auch ein Ring aus gleichem Material wie die zu verschweißenden Rohrteile eingelegt werden kann, ausgerichtet. Die um die Stoßfuge herum angeordnete Elektromuffe wird sodann über das in sie eingelegte elektrische Heizelement erhitzt. Es kommt dabei an der Grenzfläche Muffe/Rohrteile oberflächlich zu einem Erweichen des Kunststoffes und mithin zu einem Verschweißen von Muffe und Rohrteilen. Eine Schweißverbindung zwischen den Rohrteilen längs des Rohrspaltes erfolgt hierbei jedoch nicht. Der Spalt bleibt praktisch erhalten und trägt somit zu einer relativ starken Störung der in den verbundenen Rohrteilen später stattfindenden Strömung bei. Darüber hinaus liegt das elektrische Heizelement im Bereich des Rohrspaltes in vielen Fällen frei und ist daher Korrosion ausgesetzt.

Bislang konnte die beschriebene Schweißtechnik des PEHD-Rohrleitungsbaus mit vergleichsweisen großen Rohrdurchmessern nicht bei dem Verschweißen von PVDF-Rohrleitungssystemen mit ihren relativ kleinen Durchmessern angewendet werden. Bei PVDF-Rohren kommt es wegen der erwähnten geringen Durchmesser und den damit verbundenen geringen Wandstärken beim Anwenden der bekannten Elektromuffenschweißung zu einem Einfallen der Rohrteile im erhitzten Zustand, was darauf hinausläuft, daß keine reproduzierbare Schweißnahtqualität hergestellt werden kann.

Grundsätzlich ist das Verschweißen von Kunststoffrohrteilen mittels Elektroschweißmuffen in der FR-A-1 416 207 beschrieben. Es werden hierbei zwei zu verbindende Rohrteile aneinandergestoßen. Eine den Stoß in einer axialen Erstreckung von etwa zwei mal dem Durchmesser der Kunststoffrohrteile überdeckende Elektroschweißmuffe mit eingelegten Schweißdrähten wird erhitzt, so daß es zu einer Schweißverbindung im Bereich der zylindrischen Flächen von Kunststoffrohrteilen und Elektromuffe kommt.

Aus der EP-A-0 262 735 ist ein Verfahren zum Herstellen von Halbzeugen zur Herstellung von Elektroschweißmuffen bekannt. In einem Zwischenschritt wird ein mit Windungen zur Aufnahme von Heizdraht versehener Rohling hergestellt. Nach dem Aufwickeln des Drahtes und Beschichten mit einer äußeren Kunststoffschicht kann der gezeigte Rohling in Einzelteile unterteilt werden, die weiter zu Elektroschweißmuffen verarbeitet werden. Derartige Schweißmuffen weisen dann einen Bereich dichter Wicklungen auf, die beim Gebrauch aufschmelzen. Sogenannte "kalte" Bereiche des Rohlings entsprechen den Enden der zu fertigenden Elektroschweißmuffen. Diese Muffen sind somit nicht mit dem Stumpfschweißen der Stoßflächen von Kunststoffrohren befaßt.

Die Aufgabe der Erfindung besteht darin, ein Verfahren der eingangs genannten Art zu schaffen, mit dem die Elektromuffenschweißung erfolgreich für das Verschweißen von insbesondere PVDF-Rohren und rohrähnlichen Ansatzstücken aus solchem Kunststoff eingesetzt werden kann. Außerdem soll eine Muffe angegeben werden, mit der das erfindungsgemäße Verfahren umgesetzt wird.

Das erfindungsgemäße Verfahren geht hierbei aus von den Verfahrensschritten, daß die zu verschweißenden Kunststoffrohrteile stumpfgestoßen und in einem weiteren Bereich der Stoßnaht über eine Länge von jeweils etwa 0,2 bis 1,0 mal dem Rohraußendurchmesser, gemessen von der Stoßnaht, mittels einer elektrisch beheizten Muffe aus Kunststoff erwärmt und mit dieser verschweißt werden.

Gelöst ist die erfindungsgemäße Aufgabe dadurch, daß innerhalb der weiteren Bereiche ein engerer Bereich der Stoßnaht stärker erwärmt wird, so daß es neben dem Verschweißen von innerer Oberfläche der Muffe und anliegender Oberfläche der Rohrteile zu einer Stumpfschweißung der Rohrteile längs der Stoßnaht kommt.

Das erfindungsgemäße Verfahren sieht somit u.a. eine verstärkte Erwärmung des Bereichs der Stoßfuge beider Rohrteile vor, wobei darauf zu achten ist, daß die Rohrteile stumpf gestoßen sind, also eng bzw. satt aneinander anliegen. Neben der zylinderförmigen Schweißfläche zwischen Muffeninnenwandung und Außenfläche der von ihr abgedeckten Rohrteile kommt es somit auch zu einer Schweißverbindung über die Rohrwandungsdicke. Hierdurch wird das Heizelement, sei es in Form einer Heizwendel, eines Drahtnetzes o.dgl. vorgesehen, mit Kunststoff völlig umhüllt. Ein vollständiger Schutz gegen Korrosion ist somit gewährleistet. Das später im Rohr strömende Medium kann somit auch nicht durch Bestandteile der Heizwendel kontaminiert werden.

Die Erfindung ist auch auf eine elektrisch beheizbare oder Elektromuffe gerichtet, die im Bereich ihrer Innenwandung ein Heizelement aufweist und mit Vorteil beider Durchführung des erfindungsgemäßen Verfahrens eingesetzt werden kann.

Die Muffe ist dadurch gekennzeichnet, daß sie im Bereich der abzudeckenden Stoßfuge größere Heizleistung als in ihren beiden Außenbereichen aufweist. Mit der Erfindung wird, im Bereich der Stoßfläche beider Rohrteile erhöhte Heizleistung eingebracht.

Dies führt zu dem Erweichen oder Aufschmelzen der Rohrenden, wodurch es zu einer Stumpfschweißung und durchgehenden axialen Verbindung der beiden Rohrteile kommt. Diese erfindungsgemäße Ausführung trägt zusätzlich zu der angestrebten korrosionsgeschützten Anordnung des Heizelementes bei.

Ein bevorzugtes Ausführungsbeispiel der Erfindung zeichnet sich dadurch aus, daß das Heizelement eine Heizdrahtwendel ist, die im Bereich der Stoßfuge enger als an den beiden anschließenden Außenbereichen gewickelt ist, in diesem Bereich also geringere Steigung aufweist.

Das erfindungsgemäße Heizelement kann auch ein Heizgitter oder Heiznetz sein, wobei die radial zu den Rohrteilen verlaufenden Drähte im Bereich der zu überdeckenden Stoßnaht enger zueinander als in den beiden Außenbereichen angeordnet sind. Eine Steigerung der Heizleistung im Bereich der Stoßnaht kann auch dadurch erfolgen, daß der Heizdrahtdurchmesser im Bereich der Stoßnaht dünner als in den beiden Außenbereichen ist. Schließlich kann gemäß der Erfindung der angestrebte Effekt der gesteigerten Heizleistung dadurch erreicht werden, daß bei gleicher Steigung der Heizwendel über die Muffe im Bereich der Stoßnaht eine zusätzliche Heizdrahtwendel vorgesehen ist.

Weitere Einzelheiten, Merkmale und Vorteile der Erfindung ergeben sich aus der folgenden Beschreibung mehrerer bevorzugter Ausführungsbeispiele sowie anhand der schematischen Zeichnung und der Unteransprüche. Es zeigen:
- Fig. 1: einen teilweisen Längsschnitt durch zwei zu verschweißende Rohrteile mit einer herkömmlichen Elektromuffe nach dem Stand der Technik;
- Fig. 2: die gleiche Ansicht wie Fig. 1 einer erfindungsgemäßen Elektromuffe mit den zu verschweißenden Rohrteilen;
- Fig. 3: eine abgewandelte Ausführungsform des Gegenstandes der Fig. 2;
- Fig. 4: eine Darstellung der Vorbereitung des erfindungsgemäßen Verfahrens;
- Fig. 5: eine Spannvorrichtung zur Durchführung des erfindungsgemäßen Verfahrens in Draufsicht;
- Fig. 6: eine Darstellung der Schweißvorrichtung zur Durchführung des erfindungsgemäßen Verfahrens und
- Fig. 7: die erfindungsgemäße Muffe nach Fig. 2 in vergrößerter Darstellung.

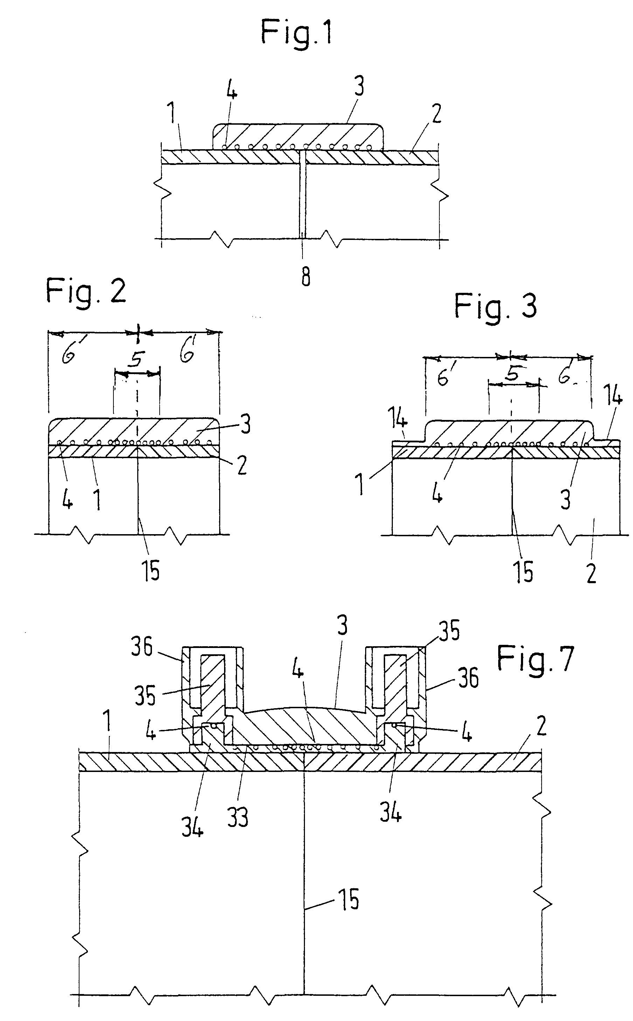

Die Fig. 1 zeigt den Stand der Technik zum Verschweißen zweier PEHD-Rohrteile 1 und 2, die unter Einhaltung eines Spaltes 8 aneinander angrenzend positioniert werden. Eine Elektromuffe 3 weist im Bereich ihrer inneren Oberfläche eine Heizdrahtwendel 4 auf. Wird durch diese Wendel ein elektrischer Strom geschickt, so kommt es zur Widerstandserhitzung mit der Folge, daß die an die Heizdrahtwendel 4 angrenzenden PEHD-Teile der Muffe 3 und der Rohrteile 1 und 2 angeschmolzen werden, wodurch es beim Abkühlen zu einem Verschweißen der Rohrteile 1 und 2 jeweils mit der Muffe 3 kommt. Der Spalt 8 wird bei dem vorbekannten Verfahren jedoch nicht ausgefüllt, und die Heizdrahtwendel 4 bleibt gegenüber der Rohrinnenfläche partiell offen und ist somit Korrosion ausgesetzt.

Die erfindungsgemäße Muffe 3 ist in den Fig. 2 und 3 besonders dargestellt. Bei dem erfindungsgemäßen Verfahren werden die beiden Rohrteile 1 und 2 stumpf gestoßen, d. h. sie liegen aneinander an, wie dies durch die Naht oder Stoßfläche 15 angezeigt ist.

Die Heizdrahtwendel 4 ist in einem inneren Bereich 5, der die Naht 15 überdeckt, enger gewickelt, so daß es in diesem inneren Bereich zu einer stärkeren Wärmeentwicklung beim Erhitzen der Heizdrahtwendel kommt als in ihren beiden daran angrenzenden äußeren oder weiteren Bereichen 6. Die Erwärmung kann so gesteuert oder die Anordnung der Wendelwicklungen so vorgenommen werden, daß es an den die Naht 15 bildenden Enden der Rohrteile 1 und 2 zu einem vollständigen Erweichen der Rohrteile 1 und 2 kommt, wobei nach dem Erkalten die beiden Rohrteile 1 und 2 stumpf miteinander verschweißt sind, neben der Verschweißung mit der Elektromuffe 3 längs der zylindrischen Anlagefläche von Muffe 3 und Rohrteilen 1 und 2. Vor dem Beginn des Schweißvorganges kann noch erfindungsgemäß ein Blasebalg 10 in das Rohrinnere im wesentlichen in den von der Muffe 3 abgedeckten Bereich eingeführt werden. Er wird mit Druck, vorzugsweise Luftdruck, mit 1 bis 3 bar beaufschlagt und stützt somit zum einen den durch die Muffe erwärmten Rohrteil insgesamt ab und erhält somit die kreisrunde Querschnittsform der Rohre, da er durch die Druckbeaufschlagung dicht an der Innenwandung der Rohrteile 1 und 2 anliegt. Außerdem verhindert er ein Eindringen von erweichtem Kunststoff in das Rohrinnere an der Stoßfläche 15 beider Rohrteile 1 und 2, die an dieser Stelle durch die dort erfindungsgemäß verstärkte Heizleistung durchgehend, d.h. sich durch die Rohrwanddicke erstreckend, erweicht werden. Auf diese Weise wird auch die Ausbildung eines für den späteren Betrieb störenden Innenwulstes zuverlässig unterdrückt.

Nach Erkalten der erweichten Kunststoffteile zwischen Innenwandung der Muffe 3 und Außenwandung der Rohrteile 1 und 2 sowie längs der radial sich an den Stoßflächen 15 der Rohrteile 1 und 2 erstrek kenden Stoßfläche, bei vorherigem Abstellen der Beheizung der Muffe, wird der Blasebalg 10 aus dem Rohrinneren entnommen. Die Rohrteile 1 und 2 sind zu einem einzigen Rohr unter präzisem Beibehalten ihrer kreisrunden Querschnittsform und Vermeidung eines Innenwulstes und Spaltes 8 miteinander verschweißt.

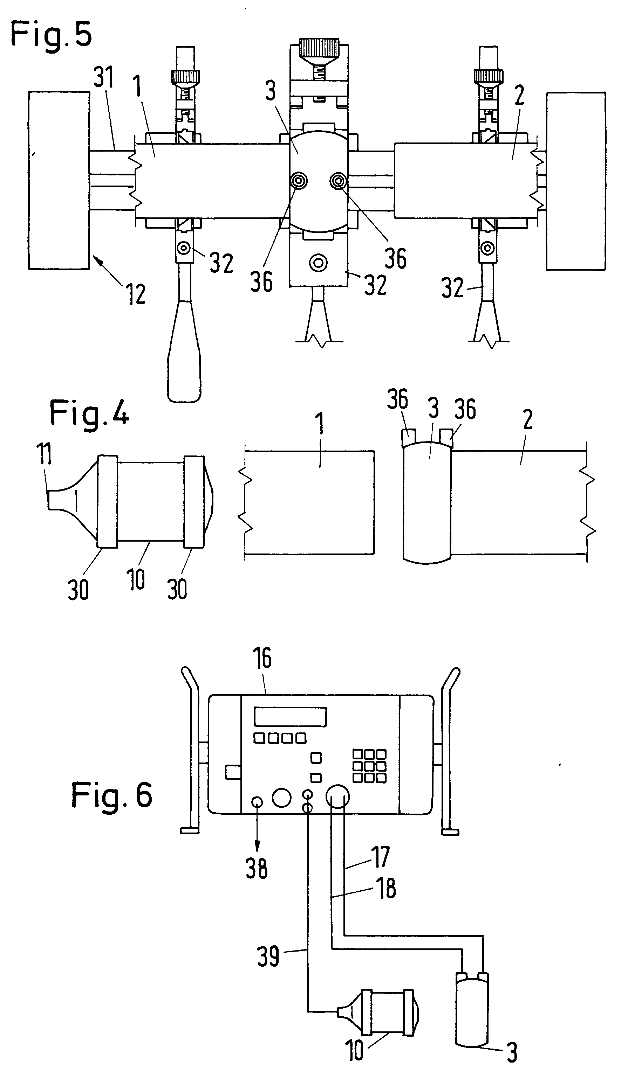

Wie sich aus Fig. 4 ergibt, kann der Blasebalg 10 im Bereich seiner axialen Enden auch mit Kunststoffringen umgeben sein, die vorzugsweise aus Polytetrafluorethylen oder einem ähnlichen Werkstoff bestehen, der vergleichsweise gut in den zu verschweißenden Rohrteilen 1 und 2 gleitet. Der Außendurchmesser der Kunststoffringe 30 ist geringfügig geringer als der der Rohrteile 1 und 2, in die der Blasebalg 10 eingeschoben werden soll. Der Blasebalg 10 wird bezüglich der Stoßnaht 15 so angeordnet, daß die Kunststoffringe 30 im wesentlichen symmetrisch zu ihr angeordnet werden. Sodann wird der Blasebalg 10 mit Druck beaufschlagt, wobei er sich längs seines zwischen den Kunststoffringen 30 befindlichen Teils eng an die Stoßnaht 15 anlegt und beim eigentlichen Schweißvorgang der Bildung einer Schweißraupe zuverlässig entgegenwirkt.

Fig. 4 zeigt eine schematische Darstellung der Vorbereitung des Schweißvorganges. Auf das Rohrteil 2 ist bereits die Muffe 3 aufgeschoben. Das Rohrteil 1 wird anschließend ebenfalls in die Muffe 3 von der dem Rohrteil 2 gegenüberliegenden Seite eingeschoben, bis es mittig in der Muffe mit dem Rohrteil 2 zusammentrifft. Beide Rohrenden sind vorher plangehobelt. Anschließend wird der Blasebalg 10 in das Rohrinnere unter die Muffe 3 eingeführt. Beim gezeichneten Ausführungsbeispiel erstreckt sich der Blasebalg über eine etwa zweimal größere Axiallänge als die Muffe 3 und stützt somit den Schweißbereich der Muffe und die daran angrenzenden Bereiche der Rohrteile 1 und 2 nach Druckbeaufschlagung zuverlässig ab. Die Druckzuführung erfolgt über eine Schlauchverbindung am Ende 11. Bezüglich der Kunststoffringe 30 wird auf die vorstehenden Ausführungen verwiesen.

Die Fig. 5 gibt zusätzlich eine Spannvorrichtung 12 wieder, in die die Rohrteile 1 und 2 axial fluchtend während des Schweißvorganges eingespannt werden. Der Blasebalg 10 ist bei diesem Ausführungsbeispiel nicht dargestellt. Das Rohrteil 2 muß über das ihm zugeordnete Spannelement 32 noch in die Muffe 3 eingeführt werden.

Die Spannvorrichtung 12 besteht grundsätzlich aus einem Support 31, auf dem drei Spannelemente 32 verschiebbar und feststellbar gelagert sind. Je ein Spannelement 32 dient zur Aufnahme des Rohrteils 1, der Muffe 3 und des Rohrteils 2. Diese Bestandteile des zu verschweißenden Rohres sind jeweils in den Spannelementen 32 zueinander fluchtend ausrichtbar und feststellbar, so daß diese Elemente für den Schweißvorgang fest zueinander angeordnet sind.

In Fig. 3 ist eine der Muffe 3 nach Fig. 2 entsprechende Muffe 3 dargestellt. Sie unterscheidet sich von der Muffe 3 nach Fig. 2 dadurch, daß sie beidseitig mit Muffenansätzen 14 versehen und somit axial verlängert ist. Bei Rohrteilen geringen Durchmessers kann hiermit auf die Spannvorrichtung 12 verzichtet werden. Die Muffenansätze 14 tragen dazu bei, daß die Rohrteile 1 und 2 in der eigentlichen Muffe 3 vor dem Verschweißen zuverlässig gehaltert und angeordnet sind, wobei die Stoßflächen auch hier stumpf aufeinandertreffen und dann die Naht 15 bilden.

In Fig. 6 ist ein Schweißgenerator 16 mit Blasebalg 10 und Muffe 3 zur Durchführung des erfindungsgemäßen Verfahrens dargestellt. Der Blasebalg 10 ist über den Schweißgenerator 16 an eine Druckluftquelle 38 angeschlossen und wird dann gemäß Programmierung über einen einzulesenden Barcode mit geregeltem über eine Leitung 39 Druck versorgt. Die Muffe 3 ist über Leitungen 17, 18 an den Schweißgenerator 16 angeschlossen und wird von dort mit elektrischer Energie versorgt.

Der Schweißgenerator wird in der Regel mit einer Spannung von 110 bis 220 Volt versorgt. Er liefert einen Schweißstrom mit einer Spannung von etwa 5 bis 10 Volt und einer Stromstärke von etwa 4 bis 5 Ampère. Abhängig von den im Barcode, der mit den Rohren bzw. den Muffen mitgeliefert wird, abgelegten Daten, wird dann die Schweißzeit und der Schweißstrom automatisch vorgegeben. Im Barcode können Werte bezüglich Hersteller, Dimension von Muffe und Rohr, Wandstärke und der somit erforderlichen Schweißzeit abgelegt werden.

Die Erfindung zeigt einen Weg, vergleichsweise dünnwandige Rohre aus PVDF und auch anderen Kunststoffen miteinander zu verschweißen. Der Durchmesser dieser Rohre beträgt in der Regel etwa 20 bis 160 mm. Die Wandungsdicke ist etwa 1,9 bis 10 mm. Die Wandungsdicke der hier beschriebenen Muffen beläuft sich auf etwa 3 bis 10 mm, die der Muffenansätze auf etwa 1,5 mm. Die axiale Erstreckung der Muffenansätze beträgt im bevorzugten Fall etwa 7 bis 8 mm. Bei Rohrdurchmessern von 20 bis 35 mm entspricht die axiale Länge der erfindungsgemäßen Muffe etwa einmal dem Rohrdurchmesser; bei Rohrdurchmessern von etwa 35 bis 160 mm etwa 0,6 bis 0,4 mal dem Durchmesser. Hieraus folgt, daß die erfindungsgemäßen Muffen vergleichsweise kurze axiale Länge aufweisen. Auf diese Weise ist es möglich, nicht nur geradlinig erstreckende Rohre miteinander zu verschweißen, sondern auch Rohrkrümmer und Fittings sowohl untereinander als auch mit geradlinigen Rohrabschnitten.

Zur Verdeutlichung der erfindungsgemäßen Muffe ist ein bevorzugtes Ausführungsbeispiel nochmals in Fig. 7 stark vergrößert dargestellt. Es sind die beiden Rohrteile 1 und 2 ersichtlich, die längs der Stoßnaht 15 stumpf gestoßen sind. Symmetrisch über der Stoßnaht ist bereits die Muffe 3 vorgesehen. Die Fig. 7 gibt die Rohrteile 1, 2 und die Muffe 3 im Längsschnitt wieder, wobei, wie ersichtlich, nur die eine Hälfte dieses Längsschnittes dargestellt ist. Im vorliegenden Fall besteht die Muffe aus einer Hülse 33, auf der die Heizwendel 4 vorgesehen ist, und zwar derart, daß die Windungsabstände im Bereich der Stoßnaht 15 untereinander geringer sind als in den beiden Außenbereichen der Muffe, so daß in diesem Bereich der zu überdeckenden Stoßnaht 15 eine gegenüber den Außenbereichen verstärkte Heizleistung der Muffe gegeben ist, die auch zu dem Verschweißen der stumpf aufeinander stoßenden Stirnflächen der Rohrteile 1 und 2 längs der Stoßnaht 15 führt.

Die Hülse 33 weist im Bereich ihrer axialen Enden jeweils einen Ansatz 34 auf, auf den die beiden Enden der Heizwendel 4 hinaufgeführt sind. Auf die Ansätze werden sodann elektrische Kontaktelemente 35 aufgesteckt. Dies sind Arbeitsvorgänge bei der Produktion der Muffe, die naturgemäß vor dem Anordnen der gesamten Muffe auf den Rohrteilen 1 und 2 zu erfolgen haben. Die Kontaktelemente 35 werden mit den Leitungen 17, 18 verbunden.

Bei dem eigentlichen Herstellungsvorgang der Muffe 3 wird nach Anordnen der Heizwendel 4 und der Klemmen 35 in der beschriebenen Weise die so geschaffene Einheit in einem weiteren Arbeitsvorgang und einem weiteren Werkzeug mit Kunststoff umspritzt, so daß die endgültige Muffe 3 in der gezeichneten Form erhalten wird. Für die Klemmen 35 wird hierbei je eine Anschlußbuchse 36 erzeugt.

Hervorzuheben ist noch, daß dann eine besonders gegen Kontamination durch die eingebaute Heizwendel 4 geschützte Muffe 3 erhalten wird, wenn erfindungsgemäß der Heizdraht, aus dem die Heizwendel 4 gewickelt wird, vor seinem Einbau in die Muffe 3, also vor dem Aufwickeln auf die Hülse 33, mit PFA beschichtet wird und wenn die eigentliche Muffe 3 einschließlich der Hülse 33 aus PVDF gebildet wird. PFA hat einen etwas höheren Schmelzpunkt als PVDF. Beim Schweißvorgang wird die Umhüllung des Heizdrahtes deshalb weniger erweicht als das PVDF der Muffe, so daß evtl. freie Materialpartikel des Heizdrahtes in der PFA-Umhüllung zurückgehalten werden. Mit einer derartigen Muffe werden vorteilhafterweise auch Rohrteile 1,2 aus PVDF verschweißt. Es genügt wenn die PFA-Beschichtung des Heizdrahtes eine Dicke von etwa 0,1 mm beträgt.

## Patentansprüche

1. Verfahren zum Schweißen von Kunststoffrohrteilen (1, 2) vergleichsweise geringen Durchmessers, insbesondere aus Polyvinylidendifluorid (PVDF), mit folgenden Schritten:
die zu verschweißenden Kunststoffrohrteile (1, 2) werden stumpf gestoßen und in einem weiteren Bereich (6) der Stoßnaht (15) über eine Länge von jeweils etwa 0,2 bis 1,0 mal dem Rohraußendurchmesser, gemessen von der Stoßnaht (15), mittels einer elektrisch beheizten Muffe (3) aus Kunststoff erwärmt und mit dieser verschweißt,
**dadurch gekennzeichnet, daß** innerhalb der weiteren Bereiche (6) ein engerer Bereich (5) der Stoßnaht (15) stärker erwärmt wird, so daß es neben dem Verschweißen von innerer Oberfläche der Muffe (3) und anliegender Oberfläche der Rohrteile (1, 2) zu einer Stumpfschweißung der Rohrteile (1, 2) längs der Stoßnaht (15) kommt.

2. Verfahren nach Anspruch 1,
**dadurch gekennzeichnet, daß** im Inneren der Kunststoffrohrteile (1, 2) im Bereich der Stoßnaht (15) ein Blasebalg (10) angeordnet und mit einem Druck von etwa 1 bis 3 bar beaufschlagt wird, der nach Erhärten des erweichten Kunststoffs entspannt und aus dem verbundenen Kunststoffrohr entnommen wird.

3. Verfahren nach Anspruch 1 oder 2,
**dadurch gekennzeichnet, daß** als Material für die Rohrteile (1, 2) und die Elektromuffe (3) Polyvinylchlorid (PVC), Clean-Polyvinylchlorid (CPVC), Polyethylen (PE), Polypropylen (PP), Ethylenchlortrifluorethylen (ECTFE), Perfluoralkoxyalkan (PFA), Polyetheresterketon (PEEK), Polyphenylensulfid (PPS) o.dgl. verwendet wird.

4. Muffe zum Schweißen von Kunststoffrohrteilen (1, 2) vergleichsweise geringen Durchmessers, insbesondere aus Polyvinylidendifluorid (PVDF), mit einem im Bereich der Innenwandung der Muffe (3) angeordneten elektrischen Heizelement (4),
**dadurch gekennzeichnet, daß** das Heizelement (4) in seinem die Stoßnaht (15) der Kunststoffrohrteile (1, 2) überdeckenden Bereich (5) zum Erweichen des Stoßbereichs der aneinandergestoßenen Kunststoffrohrteile (1, 2) größere Heizleistung als in seinen beiden Außenbereichen (6) aufweist.

5. Muffe nach Anspruch 4,
**dadurch gekennzeichnet, daß** das Heizelement eine Heizdrahtwendel (4) ist, die im Bereich (5) der zu überdeckenden Stoßnaht (15) geringeren Windungsabstand als in ihren beiden Außenbereichen (6) aufweist.

6. Muffe nach Anspruch 4,
**dadurch gekennzeichnet, daß** das Heizelement (4) ein Heizgitter oder Heiznetz ist, wobei die radial zu den Rohrteilen (1, 2) verlaufenden Drähte im Bereich (5) der zu überdeckenden Stoßnaht enger zu einander als in seinen beiden Außenbereichen (6) angeordnet sind.

7. Muffe nach Anspruch 4,
**dadurch gekennzeichnet, daß** bei gleicher Steigung der Heizdrahtwendel (4) der Heizdrahtdurchmesser im Bereich (5) der Stoßnaht (15) dünner als in den beiden Außenbereichen (6) ist.

8. Muffe nach mindestens einem der Ansprüche 4 bis 6,
**dadurch gekennzeichnet, daß** bei gleicher Steigung der Heizdrahtwendel (4) in dem die Stoßnaht (15) überdeckenden Bereich eine Zusatzheizdrahtwendel vorgesehen ist.

9. Muffe nach mindestens einem der Ansprüche 4 bis 6,
**dadurch gekennzeichnet, daß** ihr Verhältnis von axialer Länge zu ihrem Innendurchmesser etwa 0,2:1 bis 1:1 ist.

10. Muffe nach Anspruch 9,
**dadurch gekennzeichnet, daß** das Verhältnis von axialer Länge zu dem Innendurchmesser bei einem Rohrdurchmesser von etwa 20 bis 35 mm etwa 1:1, bei einem Innendurchmesser von etwa 35 bis 160 mm etwa 0,4:1 bis 0,6:1 ist.

11. Muffe nach mindestens einem der Ansprüche 4 bis 10,
**dadurch gekennzeichnet, daß** sie beidseitig einstückig mit Muffenansätzen (7) geringerer Dicke als Halteeinrichtung für die zu verschweißenden Rohrteile (1, 2) versehen ist und daß die Innendurchmesser von Muffe (3) und Muffenansätzen (7) gleich sind.

12. Muffe nach Anspruch 4 bis 11,
**dadurch gekennzeichnet, daß** das Heizelement (4) im Bereich der Innenfläche der Muffe (3) innerhalb der Muffe (3) angeordnet ist.

## Claims

1. A method of welding tubular plastic parts (1, 2) of comparatively small diameter and consisting particularly of polyvinylidene difluoride (PVDF), with the following stages:
the tubular plastic parts (1, 2) which are to be welded are butt welded and in a relatively wide portion (6) of the butt weld (15) are heated by means of an electrically heated sleeve (3) of synthetic plastics material over a length of in each case about 0.2 to 1.0 times the outside diameter of the tube, measured from the butt weld (15), and are welded to the sleeve,
**characterised in that**
within the relatively wide portions (6) a narrower area (5) of the butt weld (15) is more intensely heated so that, in addition to the welding of the inside surface of the sleeve (3) and the contacting surface of the tubular parts (1, 2), there is a butt welding of the tubular parts (1, 2) along the butt weld (15).

2. A method according to claim 1, **characterised in that** in the interior of the tubular plastic parts (1, 2) there is in the region of the butt weld (15) a bellows (10) which is subjected to a pressure of about 1 to 3 bars and which, once the softened plastic has hardened, is relieved of pressure and removed from the connected plastic tube.

3. A method according to claim 1 or 2, **characterised in that** polyvinyl chloride (PVC), clean polyvinyl chloride (CPVC), polyethylene (PE), polypropylene (PP), ethylene chlorotrifluorethylene (ECTFE), perfluoralkoxy alkane (PFA), polyether ester ketone (PEEK), polyphenylene sulphide (PPS) or the like is used as a material for the tubular parts (1, 2) and the electrically heated sleeve (3).

4. A sleeve for welding tubular plastic parts (1, 2) of comparatively small diameter, consisting particularly of polyvinylidene difluoride (PVDF), with an electric heating element (4) disposed in the region of the inside walls of the sleeve (3),
**characterised in that**
in its portion (5) which covers the butt weld (15) of the tubular plastic parts (1, 2), the heating element (4) has, for softening the area of the joint of the adjacently butting tubular plastic parts (1, 2) a greater heat output than in its two outer portions (6).

5. A sleeve according to claim 4, **characterised in that** the heating element is a heated wire filament (4) which, in the region (5) of the butt weld (15) which is to be covered, has a lesser winding gap than in its two outer portions (6).

6. A sleeve according to claim 4, **characterised in that** the heating element (4) is a heating grid or heating mesh whereby the wires in the region (5) of the butt weld which is to be covered and which extends radially in relation to the tubular parts (1, 2) are arranged more closely to one another than they are in its two outer portions (6).

7. A sleeve according to claim 4, **characterised in that** for the same pitch of the heated wire filament (4), the diameter of the heated wire is thinner in the region (5) of the butt weld (15) than it is in the two outer portions (6).

8. A sleeve according to at least one of claims 4 to 6, **characterised in that** for the same pitch of the heated wire filament (4), an auxiliary heated wire filament is provided in the region covering the butt weld (15).

9. A sleeve according to at least one of claims 4 to 6, **characterised in that** its proportion of axial length to its inside diameter is approximately 0.2:1 to 1:1.

10. A sleeve according to claim 9, **characterised in that** the ratio of axial length to the inside diameter in the case of a tube diameter of about 20 to 35 mm is approx. 1:1 while for an inside diameter of about 35 to 160 mm, is approx. 0.4:1 to 0.6:1.

11. A sleeve according to at least one of claims 4 to 10, **characterised in that** it has on both sides and in one piece with sleeve extension pieces (7) of lesser thickness as a retaining means for the tubular parts (1, 2) which are to be welded and in that the inside diameters of sleeve (3) and sleeve extension pieces (7) are the same.

12. A sleeve according to claims 4 to 11, **characterised in that** the heating element (4) is disposed inside the sleeve (3) in the region of the inner surface of the sleeve (3).

## Revendications

1. Procédé pour le soudage d'éléments tubulaires en matière plastique (1, 2) à diamètre relativement petit, en particulier constitués de difluorure de polyvinylidène (PVDF), comprenant les étapes ci-après dans lesquelles :
on amène bout à bout les éléments tubulaires en matière plastique (1, 2) destinés à être soudés et on les chauffe dans une zone étendue (6) de la soudure bout à bout (15) sur une longueur respective d'environ 0,2 à 1,0 fois le diamètre externe du tube, mesurée à partir de la soudure bout à bout (15), à l'aide d'un manchon (3) en matière plastique chauffé par voie électrique, et on les soude avec ce dernier,
**caractérisé en ce que**, dans les limites de la zone étendue (6), on chauffe plus fortement une zone plus étroite (5) de la soudure bout à bout (15), si bien que l'on obtient, à côté de la soudure de la surface interne du manchon (3) et de la surface adjacente des éléments tubulaires (1, 2), un soudage en bout des éléments tubulaires (1, 2) le long de la soudure bout à bout (15).

2. Procédé selon la revendication 1, **caractérisé en ce qu'**on dispose un soufflet (10) à l'intérieur des éléments tubulaires en matière plastique (1, 2) dans la zone de la soudure bout à bout (15), sur lequel on exerce une pression d'environ 1 à 3 bar, que l'on détend après le durcissement de la matière plastique ramollie et que l'on retire du tube relié en matière plastique.

3. Procédé selon la revendication 1 ou 2, **caractérisé en ce qu'**on utilise à titre de matière pour les éléments tubulaires (1, 2) et pour le manchon électrique (3), du chlorure de polyvinyle (PVC), du chlorure de polyvinyle sans mélange (CPVC), du polyéthylène (PE), du polypropylène (PP), de l'éthylènechlorotrifluoréthylène (ECTFE), du perfluoroalcoxyalcane (PFA), de la polyétherestercétone (PEEK), du polyphénylènesulfure (PPS) ou analogues.

4. Manchon pour le soudage d'éléments tubulaires en matière plastique (1, 2) à diamètre relativement petit, en particulier constitués de difluorure de polyvinylidène (PVDF), comprenant un élément de chauffage électrique (4) disposé dans la zone de la paroi interne du manchon (3), **caractérisé en ce que** l'élément de chauffage (4) présente, dans sa zone (5) recouvrant la soudure bout à bout (15) des éléments tubulaires en matière plastique (1, 2), à des fins de ramollissement du joint des éléments tubulaires en matière plastique (1, 2) disposés bout à bout, une puissance de chauffage supérieure à celle régnant dans ses deux zones externes (6).

5. Manchon selon la revendication 4, **caractérisé en ce que** l'élément de chauffage est un boudin à filament chauffant (4) qui présente, dans la zone (5) de la soudure bout à bout (15) à recouvrir, un enroulement plus serré que dans ses deux zones externes (6).

6. Manchon selon la revendication 4, **caractérisé en ce que** l'élément de chauffage (4) est une grille de chauffage ou un réseau de chauffage, les fils métalliques s'étendant en direction radiale par rapport aux éléments tubulaires (1, 2) étant disposés, dans la zone (5) de la soudure bout à bout à recouvrir, en étant plus serrés les uns contre les autres que dans ses deux zones externes (6).

7. Manchon selon la revendication 4, **caractérisé en ce que**, avec un pas uniforme du boudin à filament chauffant (4), le diamètre des fils métalliques de chauffage dans la zone (5) de la soudure bout à bout (15), est plus mince que dans les deux zones externes (6).

8. Manchon selon au moins une des revendications 4 à 6, **caractérisé en ce que**, avec un pas uniforme du boudin à filament chauffant (4), on prévoit un boudin à filament chauffant supplémentaire dans la zone recouvrant la soudure bout à bout (15).

9. Manchon selon au moins une des revendications 4 à 6, **caractérisé en ce que** le rapport de sa longueur axiale à son diamètre interne s'élève d'environ 0,2:1 à 1:1.

10. Manchon selon la revendication 9, **caractérisé en ce que** le rapport de la longueur axiale au diamètre interne, dans le cas d'un diamètre du tube d'environ 20 à 35 mm, s'élève à environ 1:1, et dans le cas d'un diamètre interne d'environ 35 à 160 mm, s'élève d'environ 0,4:1 à 0,6:1.

11. Manchon selon au moins une des revendications 4 à 10, **caractérisé en ce qu'**il est muni, de part et d'autre, d'un prolongement de manchon (7) réalisé en une seule pièce et possédant une épaisseur inférieure, à titre de dispositif de maintien pour les éléments tubulaires à souder (1, 2) et en ce que les diamètres internes du manchon (3) et des prolongements de manchon (7) sont égaux.

12. Manchon selon les revendications 4 six à 11, **caractérisé en ce que** l'élément de chauffage (4) est disposé à l'intérieur du manchon (3) dans la zone de la surface interne du manchon (3).
